# EUROPÄISCHE PATENTSCHRIFT

(11) **EP 2 705 175 B1**
(45) Veröffentlichungstag und Bekanntmachung des Hinweises auf die Patenterteilung: **04.03.2015**
(21) Anmeldenummer: 12733017.3
(22) Anmeldetag: 25.06.2012
(51) Int. Cl.: C25B 15/02

(54) **ENERGIEMANAGEMENTSYSTEM, INDUSTRIEANLAGE MIT EINEM ENERGIEMANAGEMENTSYSTEM SOWIE VERFAHREN ZUM BETRIEB EINES ENERGIEMANAGEMENTSYSTEMS**
ENERGY MANAGEMENT SYSTEM, INDUSTRIAL FACILITY WITH AN ENERGY MANAGEMENT SYSTEM AND METHOD FOR OPERATING SUCH AN ENERGY MANAGEMENT SYSTEM
SYSTÈME DE GESTION D'ÉNERGIE, INSTALLATION INDUSTRIELLE DOTÉE D'UN SYSTÈME DE GESTION D'ÉNERGIE ET PROCÉDÉ DE FONCTIONNEMENT D'UN SYSTÈME DE GESTION D'ÉNERGIE

(30) Priorität: 01.07.2011 EP 11172385
(43) Veröffentlichungstag der Anmeldung: 12.03.2014
(73) Patentinhaber: Siemens Aktiengesellschaft, 80333 München (DE)
(72) Erfinder: FARCHMIN, Fred, 90530 Wendelstein (DE); HAHN, Alexander, 91341 Röttenbach (DE); KÄPPNER, Roland, 97246 Eibelstadt (DE); WAIDHAS, Manfred, 90427 Nürnberg (DE); WASSER, Thomas, 91056 Erlangen (DE); WIEST, Andreas, 96172 Mühlhausen (DE); WOLF, Erik, 91341 Röttenbach (DE)
(86) Internationale Anmeldenummer: PCT/EP2012/062188
(87) Internationale Veröffentlichungsnummer: WO 2013/004526

(56) Entgegenhaltungen:
- US-A- 5 592 028
- US-A1- 2006 065 302
- US-A1- 2010 072 074

## Beschreibung

Die Erfindung betrifft ein Energiemanagementsystem. Die Erfindung betrifft weiterhin eine Industrieanlage mit einem solchen Energiemanagementsystem sowie ein Verfahren zum Betrieb eines Energiemanagementsystems.

Die Wasserelektrolyse mit alkalischen Elektrolyseuren (Elektrolyt ist in der Regel Kalilauge KOH) oder mit PEM("Polymer-Elektrolyt-Membran" oder "proton exchange membrane") -Elektrolyseuren ist Stand der Technik.

Alkalische Elektrolyseure können dabei typischerweise bauartbedingt Leistungsbereiche von 25-100% einer vorgegebenen Nennleistung abdecken und benötigen beim Anfahren eine Vorlaufzeit zum Erreichen der Betriebstemperatur. Die Alterung im dynamischen Betrieb, d.h. bei einer häufigen Anpassung der Betriebsleistung, ist bei dieser Art von Elektrolyseuren hoch. Verfügbare Leistungen der alkalischen Elektrolyseure reichen derzeit bis in mehrere MW. Überwiegender Einsatzbereich der alkalischen Elektrolyseure ist die Erzeugung von Wasserstoff zur stofflichen Nutzung in der Industrie, aufgrund der dort möglichen konstanten Betriebsweise.

PEM-Elektrolyseure können typischerweise bauartbedingt Leistungsbereiche von 0-100% einer vorgegebenen Nennleistung (bzw. im Überlastbetrieb bei systemoptimierter Auslegung bis 300%) abdecken. Gegenüber einem alkalischen Elektrolyseur zeichnet sich ein PEM-Elektrolyseur durch seine dynamische Betriebesweise aus. Verfügbare Leistungen bei der PEM-Elektrolyse reichen derzeit bis ca. 0,5 MW. PEM-Elektrolyseure werden aufgrund der kompakten Bauweise, der hohen Reinheit der erzeugten Elektrolyseprodukte Wasserstoff und Sauerstoff sowie ihrer dynamischen Eigenschaften (H₂ bzw. O₂ "on demand") überwiegend im Laborbereich eingesetzt.

Ein Elektrolyse-Energiemanagementsystem wird durch US 2010/0072074 offenbart.

Der Erfindung liegt die Aufgabe zugrunde, auch bei hohen Betriebsleistungen eine besonders dynamische Leistungsanpassung eines Elektrolysesystems zu ermöglichen.

Die Aufgabe wird erfindungsgemäß gelöst durch Energiemanagement system umfassend ein Elektrolysesystem mit einer alkalischen Elektrolyse-Einheit und einer PEM-Elektrolyse-Einheit sowie eine Steuereinheit, die dafür ausgebildet ist, im Hinblick auf eine Anpassung einer Gesamtleistung des Elektrolysesystems die Elektrolyse-Einheiten unabhängig voneinander zu steuern.

Die Erfindung basiert auf der Idee, die alkalische- und die PEM-Technologie zu einem homogenen, robusten Hybrid-Elektrolysesystem zu kombinieren, wobei durch die separate Steuerung oder Regelung der Betriebsleistungen der Elektrolyse-Einheiten die Eigenschaften beider Elektrolysetechnologien genutzt werden, um eine optimale Gesamtleistung des Elektrolysesystems zu erreichen und diese stets möglichst schnell an die Betriebsanforderungen anzupassen. Das Elektrolysesystem dient dabei sowohl zur Energiespeicherung als auch zur gleichzeitigen Erzeugung von Wasserstoff und Sauerstoff.

Die alkalische Elektrolyse-Einheit und die PEM-Elektrolyse-Einheit können dabei gleichzeitig betrieben werden, oder es kann nur eine der Elektrolyse-Einheiten im Betriebsmodus sein, während die andere heruntergefahren ist. Bei einer dynamischen Netzglättung mittels des Energiemanagementsystems wird zum Beispiel die Leistung nur einer der Elektrolyse-Einheiten variiert. Auf diese Weise wird ein Energiemanagementsystem mit einem weiten Regelbereich, hoher Dynamik, hohen Nennleistungen, langen Standzeiten und günstigen Systemkosten bereitgestellt und die Anforderungen am Elektrolysesystem lassen sich besser und effizienter erfüllen, als mit einer der beiden Technologien alleine.

Ein weiterer Vorteil des Energiemanagementsystems insbesondere gegenüber gängigen Batterien und Akkumulatoren ist, dass es durch die Verwendung von Elektrolyse-Einheiten zusätzlich zur Erzeugung von Wasserstoff und Sauerstoff dient, wobei die erzeugten Gase zur Rückverstromung gespeichert und/oder in das Erdgasnetz eingespeist werden und/oder für eine stofflichen Verwendung vorgesehen sind.

Gemäß einer bevorzugten Ausgestaltung ist die Steuereinheit dafür ausgebildet, für die Anpassung der Gesamtleistung zuerst die Leistung der PEM-Elektrolyse-Einheit zu variieren. Dies bedeutet, dass eine Leistungsanpassung insbesondere in Bezug auf Schwankungen des Stromnetzes im Sekunden- oder Minutenbereich über eine Regelung der Leistung der PEM-Elektrolyse-Einheit erfolgt, wenn es die Betriebsumstände erlauben. Die Betriebsleistung der alkalischen Elektrolyse-Einheit wird bei Stromschwankungen nicht wesentlich verändert, eine Anpassung der Betriebsleistung der alkalischen Elektrolyse-Einheit ist insbesondere dann vorgesehen, wenn dies nicht über die PEM-Elektrolyse-Einheit erfolgen kann oder wenn die Gesamtleistung des Elektrolysesystems über einen längeren Zeitraum z.B. von Stunden oder Tagen verändert werden soll, beispielsweise bei einer Veränderung der Anforderungen an die Menge der Elektrolyseprodukte. Die alkalische Elektrolyse-Einheit des Elektrolysesystems, die weniger dynamisch jedoch leistungsstärker ist, sorgt an erster Stelle für eine Grundbetriebsleistung des Elektrolysesystems. Bei Fluktuationen der Stromversorgung oder bei kurzfristigen Veränderungen der Betriebsanforderungen an das Elektrolysesystem wird hauptsächlich die Betriebsleistung der PEM-Elektrolyse-Einheit adaptiert, da die PEM-Elektrolyse-Einheit viel dynamischer als die alkalische Elektrolyse-Einheit betrieben werden kann. Es kann dabei sowohl eine positive als auch eine negative Regelleistung erfolgen. Beispielsweise werden Stromspitzen gedämpft, indem die PEM-Elektrolyse-Einheit in Überlast betrieben wird (negative Regelleistung). Im Falle einer positiven Regelleistung wird wiederum die PEM-Elektrolyse-Einheit teilweise oder vollständig heruntergefahren, so dass eine passive Energiebereitstellung erfolgt.

Vorzugsweise ist die alkalische Elektrolyse-Einheit in einem Leistungsbereich zwischen 25% und 100% einer Nennleistung betreibbar. In diesem Leistungsbereich erfolgt ein besonders stabiler Betrieb mit einer minimalen Alterung. Zweckdienlicherweise weist die alkalische Elektrolyse-Einheit in diesem Leistungsbereich eine Adaptionszeit zur Leistungsanpassung im Minutenbereich, insbesondere im Bereich zwischen 1 min und 5 min, auf.

Die PEM-Elektrolyse-Einheit wird bevorzugt in einem Leistungsbereich zwischen 0% und 300% einer Nennleistung betrieben. Der Leistungsbereich zwischen 100% und 300% der Nennleistung stellt einen Überlastbetrieb dar, der bei einer systemoptimierten Auslegung der PEM-Elektrolyse-Einheit erreichbar ist. Der Überlastbetrieb wird in der Regel nur kurzzeitig eingestellt, insbesondere unter genau festgelegten Betriebsbedingungen wie Z.B. Wärmeeinwirkung oder Wärmeabfuhr. Üblicherweise dauert der Überlastbetrieb 15 min, bei entsprechender Auslegung der Beuteile der PEM-Elektrolyse-Einheit ist auch eine Ausdehnung auf mehrere Stunden möglich.

Die PEM-Elektrolyse-Einheit weist vorteilhafterweise eine Adaptionszeit zur Anpassung ihrer Leistung im Sekundenbereich, insbesondere im Bereich zwischen 1 s und 30 s, auf. Dies bedeutet, dass die PEM-Elektrolyse-Einheit in wenigen Sekunden den Überlastbetrieb erreicht, wodurch sich Stromspitzen besonders schnell und wirkungsvoll ausgleichen lassen.

Nach einer bevorzugten Variante weist die alkalische Elektrolyse-Einheit eine Leistung zwischen 100 kW und 100 MW, insbesondere zwischen 100 kW und 5 MW auf. Nach einer weiteren bevorzugten Variante weist die PEM-Elektrolyse-Einheit eine Leistung zwischen 50 kW und 1 MW, insbesondere zwischen 50 kW und 500 kW auf. Die alkalische Elektrolyse-Einheit, die für gewöhnlich eine höhere Leistung hat, wird somit hauptsächlich zur Erzeugung von Wasserstoff und Sauerstoff eingesetzt und wird im für sie optimalen Leistungsbereich zwischen 25% und 100% der Nennleistung betrieben. Die PEM-Elektrolyse-Einheit ergänzt dabei die alkalische Elektrolyse-Einheit bei der Wasserstoff- und Sauerstoff-Herstellung, wird jedoch durch Anpassung der Gesamtleistung des Elektrolysesystems zusätzlich zum Energiemanagement verwendet.

Vorzugsweise ist das Energiemanagementsystem Bestandteil einer Industrieanlage. Unter "Bestandteil einer Industrieanlage" wird hierbei verstanden, dass das Energiemanagementsystem eine räumliche Nähe zur Industrieanlage aufweist und prozesstechnisch mit der Industrieanlage gekoppelt ist, indem wenigstens ein Elektrolyseprodukt bei der Industrieanlage verwendet wird. Insbesondere ist das Elektrolysesystem über Gasleitungen zur Zuführung von Wasserstoff und/oder Sauerstoff mit der Industrieanlage verbunden. Alternativ kann das Elektrolysesystem mit der zugehörigen Steuereinheit zum Energiemanagement eines Inselnetzes verwendet werden.

Die Aufgabe wird weiterhin erfindungsgemäß gelöst durch eine Industrieanlage mit einem Energiemanagementsystem nach einer der oben genannten Ausführungen. Die Industrieanlage kann hierbei beispielsweise eine Tagebaumine, eine Anlage der Halbleitindustrie oder der Glassindustrie, eine Metallveredelungsanlage oder eine Anlage zur Ammoniaksynthese sein. Ergänzend kann der im Elektrolysesystem erzeugte Sauerstoff ebenfalls für den in der Industrieanlage ablaufenden Prozess verwendet werden. Alternativ kann nur der Sauerstoff in der Industrieanlage verwendet werden, de mit dem Elektrolysesystem gekoppelt ist.

Bevorzugt läuft in der Industrieanlage ein technologischer Prozess ab, bei dem wenigstens ein im Elektrolysesystem des Energiemanagementsystems erzeugten Elektrolyseprodukt, insbesondere Wasserstoff, verwendet wird. Neben der Herstellung von Stoffen, die für den in der Industrieanlage ablaufenden Prozess erforderlich sind, dient Energiemanagementsystem somit zusätzlich zur positiven und negativen Regelleistung in Bezug auf die Industrieanlage.

Die Aufgabe wird zudem erfindungsgemäß gelöst durch ein Verfahren zum Betrieb eines Energiemanagementsystems umfassend ein Elektrolysesystem mit einer alkalischen Elektrolyse-Einheit und einer PEM-Elektrolyse-Einheit, wobei im Hinblick auf eine Anpassung einer Gesamtleistung des Elektrolysesystems die Elektrolyse-Einheiten unabhängig voneinander angesteuert werden. Vorzugsweise wird bei der Anpassung der Gesamtleistung des Elektrolysesystems zuerst eine Leistung der PEM Elektrolyse variiert.

Die im Bezug auf das Energiemanagementsystem bereits aufgeführten Vorteile und bevorzugten Ausgestaltungen lassen sich sinngemäß auf die Industrieanlage sowie auf das Verfahren übertragen.

Ein Ausführungsbeispiel der Erfindung wird anhand einer Zeichnung näher erläutert. Hierin zeigt die einzige Figur schematisch ein Energiemanagementsystem 2 auf Basis eines Elektrolysesystems 6.

In der Figur ist ein Energiemanagementsystem 2 gezeigt, das Bestandteil einer Industrieanlage ist, die schematisch durch den Block 4 angedeutet ist. Die Industrieanlage 4 ist eine Anlage der chemischen, der metallurgischen oder der Halbleiter-Industrie, beispielsweise eine Anlage zur Herstellung von elektrischen Halbleiter-Bauelementen wie z.B. Leuchtdioden.

Das Energiemanagementsystem 2 umfasst ein Hybrid-Elektrolysesystem 6 mit einer alkalischen Elektrolyse-Einheit 8 und einer PEM-Elektrolyse-Einheit 10. Das Energiemanagementsystem 2 umfasst weiterhin eine Leistungselektronik 12 zur Energieversorgung und Betriebsteuerung, der Wechselstrom zugeführt wird, angedeutet durch den Pfeil 14. Die Leistungselektronik 12 setzt sich z.B. aus hier nicht näher gezeigtem Gleichrichter für den elektrischen Strom, Transformer, Gasanalyser und einer Sicherheitseinrichtung zusammen. Die Leistungselektronik 12 ist dabei insbesondere "smart grid"-fähig.

Weiterhin ist eine Steuereinheit 16 vorgesehen, welche die Betriebsleistungen der alkalischen Elektrolyse-Einheit 8 und der PEM-Elektrolyse-Einheit 10 separat ansteuert oder regelt. die Steuereinheit 16 kann auch in der Leistungselektronik 12 integriert sein.

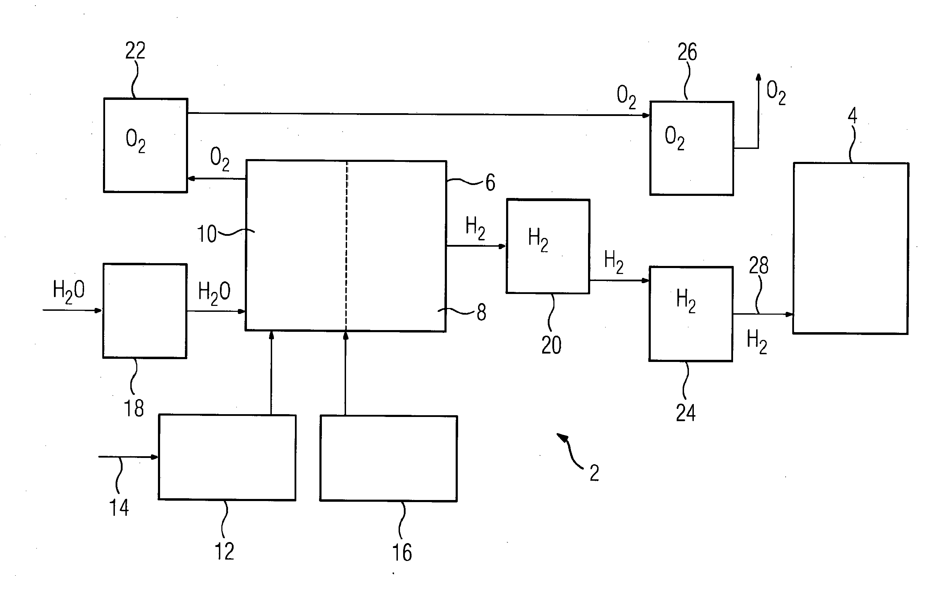

Das Elektrolysesystem 6 umfasst gemäß FIG 1 einen Vorratsbehälter 18 für Wasser und/oder Wasseraufbereitung zur Deionat-Herstellung, Vorrichtungen 20, 22 zur Konditionierung, Reinigung und Trocknung der erzeugten Elektrolysegase Wasserstoff und Sauerstoff sowie Abfüllvorrichtungen 24, 26 und/oder Medienschnittstellen für Wasserstoff und Sauerstoff. Im gezeigten Ausführungsbeispiel ist die Abfüllvorrichtung 24 für den Wasserstoff über eine Leitung 28 strömungstechnisch mit der Industrieanlage 4 verbunden, da Wasserstoff für den in der Industrieanlage 4 ablaufenden Herstellungsprozess benötigt wird. Ergänzend oder alternativ kann die Abfüllvorrichtung 26 für den Sauerstoff mit der Industrieanlage 4 strömungstechnisch gekoppelt sein.

Das Elektrolysesystem 6 mit der zugehörigen Steuerung hat somit zweierlei Funktionen. Zum einen wird Wasserstoff und/oder Sauerstoff für den in der Industrieanlage 4 ablaufenden Prozess zur Verfügung gestellt. Diese Funktion des Elektrolysesystems 6 wird insbesondere durch die alkalische Elektrolyse-Einheit 8 erfüllt, die eine relativ hohe Betriebsleistung im Megawattbereich hat und die für eine möglichst konstante Betriebsweise vorgesehen ist, wobei ihr Leistungsbereich zwischen 25% und 100% ihrer Nennleistung liegt.

Die zweite Funktion besteht im Energiemanagement durch eine geeignete Steuerung oder Regelung des Elektrolysesystems 6 durch die Steuereinheit 16. Der elektrische Strom 14, der in das Elektrolysesystem 6 eingespeist wird, weist Fluktuationen auf, was den Stromverbrauchern teuer kommen kann, da die Energieversorgungsunternehmen für die Preisbildung häufig die höchsten abgerufenen Leistungen verwenden. Daher ist das Elektrolysesystem 6 für einen hoch dynamischen Betrieb ausgelegt, indem die alkalische Elektrolyse-Einheit 8 durch die PEM-Elektrolyse-Einheit 10 ergänzt ist, durch welche eine Gesamtleistung des Elektrolysesystems 6 im Betrieb angepasst wird. Die PEM-Elektrolyse-Einheit 10 weist eine kleinere Betriebsleistung von in diesem Ausführungsbeispiel maximal 0,5 MW, jedoch kann sie vorübergehend (insbesondere mehrere Minuten) im Überlastbetrieb funktionieren, so dass ihr Leistungsbereich zwischen 0% und 300% der Nennleistung variabel ist.

Im Gegensatz zur alkalischen Elektrolyse-Einheit 8, bei der eine Leistungsanpassung innerhalb des zulässigen Leistungsbereichs einige Minuten dauern kann, zeichnet sich die PEM-Elektrolyse-Einheit 10 durch eine besonders schnelle Adaptionszeit, die für gewöhnlich unterhalb 30 s ist. Schwankungen des Stromnetzes im Sekunden- und Minutenbereich werden somit besonders effizient durch die PEM-Elektrolyse-Einheit 10 abgefangen und zur erhöhten Produktion von Wasserstoff und Sauerstoff genutzt. Entsprechend wird die Betriebsleistung der PEM-Elektrolyse-Einheit 10 in Phasen reduziert, in denen kurzzeitig hohe Leistung der Industrieanlage 4 benötigt wird, z.B. beim Anfahren von Motoren, so dass eine passive Energiebereitstellung für den Betrieb der Industrieanlage 4 stattfindet.

Durch die Kombination der beiden Elektrolyse-Einheiten 8, 10 ist somit ein Hybrid-Elektrolysesystem 6 geschaffen, welches in der Lage ist die Nachteile der alkalischen Elektrolyse durch die Vorteile der PEM-Elektrolyse umzugehen.

## Patentansprüche

1. Energiemanagementsystem (2) umfassend ein Elektrolysesystem (6) mit einer alkalischen Elektrolyse-Einheit (8) und einer PEM-Elektrolyse-Einheit (10) sowie eine Steuereinheit (16), die dafür ausgebildet ist, im Hinblick auf eine Anpassung einer Gesamtleistung des Elektrolysesystems (6) die Elektrolyse-Einheiten (8, 10) unabhängig voneinander zu steuern.

2. Energiemanagementsystem (2) nach Anspruch 1,
wobei die Steuereinheit (16) dafür ausgebildet ist, für die Anpassung der Gesamtleistung des Elektrolysesystems (6) zuerst eine Leistung der PEM-Elektrolyse-Einheit (10) zu variieren.

3. Energiemanagementsystem (2) nach Anspruch 1 oder 2, wobei die alkalische Elektrolyse-Einheit (8) in einem Leistungsbereich zwischen 25% und 100% einer Nennleistung betreibbar ist.

4. Energiemanagementsystem (2) nach einem der vorhergehenden Ansprüche,
wobei die alkalische Elektrolyse-Einheit (8) eine Adaptionszeit zur Leistungsanpassung im Minutenbereich, insbesondere im Bereich zwischen 1 min und 5 min, aufweist.

5. Energiemanagementsystem (2) nach einem der vorhergehenden Ansprüche,
wobei die PEM-Elektrolyse-Einheit (10) eine Adaptionszeit zur Leistungsanpassung im Sekundenbereich, insbesondere im Bereich zwischen 1 s und 30 s, aufweist.

6. Energiemanagementsystem (2) nach einem der vorhergehenden Ansprüche,
wobei die alkalische Elektrolyse-Einheit (8) eine Leistung zwischen 100 kW und 100 MW, insbesondere zwischen 100 kW und 5 MW aufweist.

7. Energiemanagementsystem (2) nach einem der vorhergehenden Ansprüche,
wobei die PEM-Elektrolyse-Einheit (10) eine Leistung zwischen 50 kW und 1 MW, insbesondere zwischen 50 kW und 500 kW aufweist.

8. Energiemanagementsystem (2) nach einem der vorhergehenden Ansprüche,
welches Bestandteil einer Industrieanlage (4) ist.

9. Industrieanlage (4) mit einem Energiemanagementsystem (2) nach einem der vorhergehenden Ansprüche.

10. Industrieanlage (4) nach Anspruch 9,
gestaltet zum Betrieb eines technologischen Prozesses unter verwendung von wenigstens einem im Elektrolysesystem (6) des Energiemanagementsystems (2) erzeugten Elektrolyseprodukt, insbesondere Wasserstoff.

11. Verfahren zum Betrieb eines Energiemanagementsystems (2) umfassend ein Elektrolysesystem (6) mit einer alkalischen Elektrolyse-Einheit (8) und einer PEM-Elektrolyse-Einheit (10), wobei im Hinblick auf eine Anpassung einer Gesamtleistung des Elektrolysesystems (6) die Elektrolyse-Einheiten (8, 10) unabhängig voneinander angesteuert werden.

12. Verfahren nach Anspruch 11,
wobei bei der Anpassung der Gesamtleistung des Elektrolysesystems (2) zuerst eine Leistung der PEM-Elektrolyse-Einheit (10) variiert wird.

## Claims

1. Energy management system (2) comprising an electrolysis system (6) having an alkaline electrolysis unit (8) and a PEM electrolysis unit (10) and a control unit (16) which is designed to control the electrolysis units (8, 10) independently of one another with respect to an adjustment of an overall performance of the electrolysis system (6).

2. Energy management system (2) according to claim 1, wherein the control unit (16) is designed to firstly vary a performance of the PEM electrolysis unit (10) for the adjustment of the overall performance of the electrolysis system (6).

3. Energy management system (2) according to claim 1 or 2, wherein the alkaline electrolysis unit (8) can be operated in a performance range between 25% and 100% of a nominal performance.

4. Energy management system (2) according to one of the preceding claims, wherein the alkaline electrolysis unit (8) has an adaptation time for performance adjustment in the minute range, in particular in a range between 1 min and 5 min.

5. Energy management system (2) according to one of the preceding claims, wherein the PEM electrolysis unit (10) has an adaptation time for performance adjustment in the seconds range, in particular in a range between 1 s and 30 s.

6. Energy management system (2) according to one of the preceding claims, wherein the alkaline electrolysis unit (8) has a performance between 100 kW and 100 MW, in particular between 100 kW and 5 MW.

7. Energy management system (2) according to one of the preceding claims, wherein the PEM electrolysis unit (10) has a performance between 50 kW and 1 MW, in particular between 50 kW and 500 kW.

8. Energy management system (2) according to one of the preceding claims, which is a component of an industrial plant (4).

9. Industrial plant (4) having an energy management system (2) according to one of the preceding claims.

10. Industrial plant (4) according to claim 9, configured for operating a technological process using at least one electrolysis product, in particular hydrogen, produced in the electrolysis system (6) of the energy management system (2).

11. Method for operating en energy management system (2) comprising an electrolysis system (6) having an alkaline electrolysis unit (8) and a PEM electrolysis unit (10), wherein the electrolysis units (8, 10) are controlled independently of one other with respect to an adjustment of an overall performance of the electrolysis system (6).

12. Method according to claim 11, wherein firstly a performance of the PEM electrolysis unit (10) is varied in the adjustment of the overall performance of the electrolysis system (12).

## Revendications

1. Système (2) de gestion d'énergie, comprenant un système (6) d'électrolyse ayant une unité (8) d'électrolyse alcaline et une unité (10) d'électrolyse PEM, ainsi qu'une unité (16) de commande, qui est constituée pour, en vue d'une adaptation d'une puissance globale du système (6) d'électrolyse, commander les unités (8, 10) d'électrolyse indépendamment l'une de l'autre.

2. Système (2) de gestion d'énergie suivant la revendication 1,
dans lequel l'unité (16) de commande est constituée pour faire varier d'abord une puissance de l'unité (10) d'électrolyse PEM pour l'adaptation de la puissance globale du système (6) d'électrolyse.

3. Système (2) de gestion d'énergie suivant la revendication 1 ou 2,
dans lequel l'unité (8) d'électrolyse alcaline peut fonctionner dans une plage de puissance comprise entre 25% et 100% d'une puissance nominale.

4. Système (2) de gestion d'énergie suivant l'une des revendications précédentes,
dans lequel l'unité (8) d'électrolyse alcaline a un temps d'adaptation pour l'adaptation de puissance dans la plage des minutes, notamment dans la plage comprise entre 1 mn et 5 mn.

5. Système (2) de gestion d'énergie suivant l'une des revendications précédentes,
dans lequel l'unité (10) d'électrolyse PEM a un temps d'adaptation pour l'adaptation de puissance dans la plage des secondes, notamment dans la plage comprise entre 1 s et 30 s.

6. Système (2) de gestion d'énergie suivant l'une des revendications précédentes,
dans lequel l'unité (6) d'électrolyse alcaline a une puissance comprise entre 100 kW et 100 MW, notamment entre 100 kW et 5 MW.

7. Système (2) de gestion d'énergie suivant l'une des revendications précédentes,
dans lequel l'unité (10) d'électrolyse PEM a une puissance comprise entre 50 kW et 1 MW, notamment entre 50 kW et 500 kW.

8. Système (2) de gestion d'énergie suivant l'une des revendications précédentes,
qui fait partie d'une installation (4) industrielle.

9. Installation (4) industrielle ayant un système (2) de gestion d'énergie suivant l'une des revendications précédentes.

10. Installation (4) industrielle suivant la revendication 9, conformée pour le fonctionnement d'un processus technologique en utilisant au moins un produit d'électrolyse, notamment de l'hydrogène, produit dans le système (6) d'électrolyse du système (2) de gestion d'énergie.

11. Procédé pour faire fonctionner un système (2) de gestion d'énergie, comprenant un système (6) d'électrolyse ayant une unité (8) d'électrolyse alcaline et une unité (10) d'électrolyse PEM, dans lequel on commande, en vue d'une adaptation d'une puissance globale du système (6) d'électrolyse, les unités (8, 10) d'électrolyse indépendamment l'une de l'autre.

12. Procédé suivant la revendication 11,
dans lequel, dans l'adaptation de puissance globale du système (2) d'électrolyse, on fait varier d'abord une puissance de l'unité (10) d'électrolyse (PEM).
